# EUROPÄISCHE PATENTSCHRIFT

(11) **EP 4 160 032 B1**
(45) Veröffentlichungstag und Bekanntmachung des Hinweises auf die Patenterteilung: **20.08.2025**
(21) Anmeldenummer: 22203620.4
(22) Anmeldetag: 06.05.2010
(51) Int. Cl.: F16C 33/64

(54) **VERFAHREN ZUR HERSTELLUNG EINES WÄLZLAGERELEMENTS**
METHOD FOR MANUFACTURING ROLLING BEARING ELEMENT
PROCÉDÉ DE FABRICATION D'UN ÉLÉMENT DE PALIER À ROULEMENT

(30) Priorität: 06.05.2009 EP 09006156
(43) Veröffentlichungstag der Anmeldung: 05.04.2023
(62) Teilanmeldung aus: 17173907.1
(73) Patentinhaber: Aktiebolaget SKF, 415 50 Göteborg (SE)
(72) Erfinder: Liang, Baozhu, 97456 Hambach (DE); May, Ulrike, 97526 Sennfeld (DE); Rumpel, Claus, 97440 Werneck (DE); Wagner, Gerhard, 97357 Prichsenstadt (DE)
(74) Vertreter: Kuhstrebe, Jochen

(56) Entgegenhaltungen:
- WO-A1-03/060170
- DE-C1- 10 228 333
- JP-A- 2003 193 139
- JP-A- 2007 297 676
- US-A1- 2009 052 823
- WIRTSCHAFTSVEREINIGUNG STAHL MARKETING: "Merkblatt 450 Wärmebehandlung von Stahl - Härten, Anlassen, Vergüten, Bainitisieren", 1 January 2005 (2005-01-01), pages 1 - 40, XP055476420, Retrieved from the Internet <URL:http://www.stahl-online.de/wp-content/uploads/2013/10/MB450-Waermebehandlung-von-Stahl.pdf> [retrieved on 20180517]
- ASTM INTERNATIONAL: "Standard Specification for High Hardenability Antifriction Bearing Steel", ASTM-NORM A485-03, 1 January 2003 (2003-01-01), pages 1 - 4, XP055476454, Retrieved from the Internet <URL:https://www.astm.org/DATABASE.CART/HISTORICAL/A485-03.htm> [retrieved on 20180517]
- OSCAR ZWIRLEIN ET AL: "Case Depth for Induction Hardened Slewing Bearing Rings", INTERNATIONAL OFF-HIGHWAY MEETING & EXPOSITION /SEA TECHNICAL PAPER SERIES 831371/, 12 September 1983 (1983-09-12), Milwaukee, Wisconsin, XP055476463
- "Stahlschlüssel", 1 January 1998, VERLAG STAHLSCHLÜSSEL WEGST GMBH, article C.W. WEGST: "Stahlschlüssel /Passage/", pages: 35 - 36, XP055476458
- WIRTSCHAFTSVEREINIGUNG STAHL: "Wärmebehandlung von Stahl - Randschichthärten", MERKBLATT 236, 1 January 2009 (2009-01-01), pages 1 - 39, XP055476437, Retrieved from the Internet <URL:http://www.stahl-online.de/wp-content/uploads/2013/10/MB236WaermebehandlungvonStahlRandschichthaerten.pdf> [retrieved on 20180517]
- ANONYM: "Thyrofort - Heat-treatable steels", EDELSTAHL WITTEN-KREEFELD GMBH, 1 January 2000 (2000-01-01), pages 1 - 80, XP055476447
- H. SCHLICHT ET AL.: "Ermüdung bei Wälzlagern und deren Beeinflussung durch Werkstoffeigenschaften", FAG WÄLZLAGERTECHNIK, 1 January 1987 (1987-01-01), pages 14 - 22, XP055476470
- "Rolling Contact Fatigue Testing of Bearing Steels", 1 January 1982, ASTM INTERNATIONAL, 100 Barr Harbor Drive, PO Box C700, West Conshohocken, PA 19428-2959, ISBN: 978-0-8031-0712-0, article O ZWIRLEIN ET AL: "Rolling Contact Fatigue Mechanisms?Accelerated Testing Versus Field Performance", pages: 358 - 379, XP055476475, DOI: 10.1520/STP36149S

## Beschreibung

Die vorliegende Erfindung betrifft ein Verfahren zur Herstellung eines Wälzlagerelements, insbesondere eines Laufbahnelements für ein Großwälzlager.

Bei heute bekannten Großwälzlagern werden die Laufbahnelemente im Allgemeinen aus einsatz- oder durchgehärtetem Stahl gefertigt. Bei der Verwendung von Einsatzstahl wird der an sich niedrig legierte Stahl in einer Kohlenstoffatmosphäre in einer Randschicht aufgekohlt, sodass diese nachträglich gehärtet werden kann. Für Großwälzlager ist es aufgrund der ständigen Belastung durch die umlaufenden Wälzkörper auf den Laufbahnelementen erforderlich, eine hohe Oberflächenhärte im Bereich der Laufbahnen zu erzielen, um eine lange Lebensdauer gewährleisten zu können. Das Einsatz- oder Durchhärten der Laufbahnelemente ist jedoch mit einem relativ hohen Energieverbrauch verbunden.

Bei Schwenklagern ist es hingegen bekannt, gehärtete Randschichten mittels induktiver Verfahren zu erzeugen. Bei derartigen Lagern sind jedoch die Anforderungen an die Oberflächenhärte aufgrund der andersartigen Belastung durch die Wälzkörper nicht so hoch wie bei Großwälzlagern. Klassischerweise werden bei Schwenklagern andere Stahlsorten angesetzt als bei Großwälzlagern. Insofern lassen sich die bei diesen Lagerarten bekannten induktiven Härteverfahren nicht auf die Herstellung von Großwälzlagern übertragen.

Ebenfalls ist es bei kleineren Wälzlagerdurchmessern bekannt, induktives Randschichthärten bei den dort verwendeten Stahlsorten, wie zum Beispiel 100Cr6 anzuwenden. Auch hier lassen sich die bekannten Verfahren zum induktiven Härten der Randschichten unter wirtschaftlichen Gesichtspunkten nicht auf Großwälzlager übertragen. Ferner sind aus der US 2009/052823 A1 und der JP 2003193139A Fahrzeugradlager mit gehärteten Laufbahnen bekannt. WO 03/060170 A1 offenbart weiterer Stand der Technik.

Es ist Aufgabe der vorliegenden Erfindung ein Verfahren zur Herstellung eines Wälzlagerelements für ein Großwälzlager bereitzustellen, bei denen eine hohe Lebensdauer des Wälzlagerelements bei gleichzeitig einfacher Herstellung gewährleistet ist.

Diese Aufgabe wird durch ein Verfahren mit den Merkmalen des Hauptanspruchsgelöst. Vorteilhafte Ausgestaltungen sind Gegenstand der abhängigen Unteransprüche.

Gemäß einem Ausführungsbeispiel der Erfindung wird ein Verfahren zur Herstellung eines Wälzlagerelements, insbesondere eines Laufbahnelements, für ein Großwälzlager mit folgenden Schritten:
- Auswahl eines Stahls, der eine Beimischung von Kohlenstoff von mindestens 0,46 Masse% aufweist;
- Bestimmen einer Kontaktzone für ein Wälzlagergegenelement;
- Bestimmen eines durch einen Hertzschen Kontakt zwischen Wälzlagerelement und Wälzlagergegenelement erzeugten Spannungsverlaufs in der Kontaktzone basierend auf einer zu erwartenden Belastung des Lagers;
- Induktives Härten der Kontaktzone, wodurch die Kontaktzone ein Grundgefüge und eine induktiv gehärtete Oberflächenschicht erhält, wobei das induktive Härten derart durchgeführt wird, dass
   ∘ die Oberflächenschicht eine maximale Härte aufweist, die geringer ist als die maximal erreichbare Härte des verwendeten Stahls, wobei die Härte innerhalb fertigungstechnischer Toleranzen gleich ist; und
eine Tiefe der gehärteten Oberflächenschicht den durch den Hertzschen Kontakt erzeugten Spannungsverlauf überdeckt, insbesondere tiefer in das Material hineinreicht als der Spannungsverlauf.

Im Gegensatz zur kostspieligen Verwendung von Einsatzstahl, der außerhalb der Oberflächenschicht grundsätzlich einen Anteil von weniger als 0,2 Masse% Kohlenstoff aufweist und nur durch aufwändige Aufkohlung in der Randschicht auf einen Gehalt von beispielsweise 0,8 Masse% Kohlenstoff in dieser Schicht für den Einsatz in hoch belasteten Wälzlagern ausreichend härtbar wird, lässt sich hier ein kostengünstigerer, so genannter Vergütungsstahl mit einer Beimischung von Kohlenstoff von mindestens 0,46 Masse% verwenden, wobei die Kontaktzone des Wälzlagerelements durch ein induktives Verfahren nachträglich gehärtet ist. Dieses Härtungsverfahren ist im Vergleich zur Aufkohlung der Randschicht mit einem deutlich reduzierten Aufwand verbunden. Als Wälzlagerelemente gemäß der Erfindung können insbesondere die Laufbahnelemente und/oder die Wälzkörper des Großlagers ausgebildet sein. Insbesondere die durch Wälzkontakt belasteten Elemente des Großlagers profitieren durch die erfindungsgemäße Ausgestaltung. Das Wälzlagergegenelement ist insofern das mit dem Wälzlagerelement in Wälzkontakt stehende Wälzlagerelement und ist bevorzugt ebenfalls gemäß der Erfindung ausgebildet. Das Großwälzlager weist bevorzugt einen Durchmesser von mindestens 250 mm auf.

Die Erfindung basiert dabei wesentlich auf der Erkenntnis, dass bei geringeren Kohlenstoffanteilen als 0,46 Masse% die induktive Härtung der Oberflächenschichten keine ausreichende Oberflächenhärte mit einer ausreichend stabilen Gefügestruktur zur Gewährleistung einer ausreichend langen Lebensdauer des Laufbahnelements erreicht. Insbesondere kann bei geringerem Kohlenstoffgehalt in der Randschicht beim induktiven Härten ein nachteilig instabiles Gefüge entstehen, das zu einem frühzeitigen Ausfall des Wälzlagerelements und somit des Großwälzlagers führt. Hinzu kommt, dass insbesondere bei Großwälzlagern bei der Wärmebehandlung ein nicht mehr vernachlässigbarer Verzug des Materials auftritt, so dass eine hohe Laufgenauigkeit auf den Laufbahnen für die Wälzkörper nicht mehr gewährleistet ist. Der Verzug ist nach der Wärmebehandlung wieder durch weitere, beispielsweise spanende Bearbeitung zu entfernen, was die Produktionskosten für entsprechende Laufbahnelemente weiter in die Höhe treibt. Auch nach der spanenden Bearbeitung, also der Entfernung von Material auf der Oberfläche ist jedoch sicherzustellen, dass die maximale Härte der Oberfläche der je nach der zu erwartenden Belastung gewählten Auslegung des Großlagers entspricht, so dass die erforderliche Tragfähigkeit gegeben ist. Insofern ist die Dicke der Oberflächenschicht insbesondere bei hoch belasteten Großlagern größer zu wählen als bei kleineren Lagerdimensionen.

In einer bevorzugten Ausführungsform der Erfindung weist die Oberflächenschicht eine maximale Härte auf, die geringer ist als die maximal erreichbare Härte des verwendeten Stahls. Mit dem verwendeten Stahl lässt sich grundsätzlich eine deutlich höhere Härte erzielen als mit den zum Einsatz in Großlagern bekannten Stählen, wie beispielsweise 42CrMo4. Allerdings wird dieser Vorteil bevorzugt nicht eingesetzt und lediglich eine Härte durch das induktive Härteverfahren erzeugt, die der bei bekannten Wälzlagerelementen aus 42CrMo4 für Großlager entspricht. Dadurch wird der erfindungsgemäß verwendete Stahl beim Härten nicht bis an seine werkstofflichen Grenzen gebracht, wie dies oftmals beim Einsatz von 42CrMo4 der Fall ist. Dadurch ergibt sich zwar eine zu bekannten Großlagern vergleichbare maximale Härte in der Oberflächenschicht, jedoch ein anderer Härteverlauf mit zunehmender Tiefe. Während bei bekannten Stahlsorten für Großlager die Härte nach einer vergleichsweise dünnen Randschicht stark abfällt und schnell in die Härte des nicht gehärteten Bereichs übergeht, wird bei dem erfindungsgemäß verwendeten Stahl ein deutlich flacherer Übergang erzielt. Folglich reicht die gehärtete Oberflächenschicht bei geringer werdender Härte deutlich tiefer in das Wälzlagerelement hinein als bei bekannten Großlagern. Gleichzeitig wird dadurch auch eine relativ feine und stabile Gefügestruktur hergestellt. Dies resultiert einerseits in einer deutlich erhöhten Lebensdauer der Großlager. Andererseits ist bei Einsatz des an sich höher härtbaren Stahls mit mehr als 0,46 Masse% an Kohlenstoff ein deutlich einfacherer und materialschonenderer Prozess zur Erreichung der erforderlichen Härte notwendig, so dass der Stahl weniger belastet wird. Dies kann beispielsweise darin liegen, dass der Stahl weniger hoch erwärmt werden muss und weniger schnell abgeschreckt wird, um den gewünschten flachen Härteverlauf zu zeigen.

Dabei ist nach der Erfindung zu beachten, dass die Tragfähigkeit der gehärteten Schicht und damit deren Tiefe den durch den Hertzschen Kontakt mit den Wälzlagergegenelementen erzeugten Spannungsverlauf überdeckt. Die Spannung nimmt mit zunehmender Tiefe ab. Folglich muss die Dicke der gehärteten Schicht auf die zu erwartende Belastung des Lagers abgestimmt werden, was dadurch erfolgt, dass bei höheren zu erwartenden Belastungen, also einem sich tiefer auswirkenden Spannungsverlauf dickere Randschichten erzeugt werden, als bei geringeren Belastungen.

In einer vorteilhaften Ausgestaltung der Erfindung weist der Stahl Beimischungen von Mangan, Chrom und/oder Molybdän auf. Insbesondere Beimischungen dieser Legierungselemente stellen einen Stahl bereit, der sich induktiv gut härten lässt, und eine ausreichende Härtetiefe, sowie ein geeignetes Gefüge für hohe Tragfähigkeit und lange Lebensdauer des Laufbahnelements bereitstellt. Insbesondere vorteilhaft ist es, wenn der Stahl eine Beimischung von Molybdän von mindestens 0,12 Masse% aufweist. Die vorteilhafte Härtbarkeit lässt sich ab einem Molybdän-Gehalt von 0,35 Masse% nicht mehr steigern, weshalb die Beimischung bevorzugt im Bereich von 0,12 bis 0,35 Masse% liegt.

In einer vorteilhaften Ausgestaltung der Erfindung weist die gehärtete Oberflächenschicht eine maximale Härte von mindestens 58 HRC auf. Insbesondere ab dieser Oberflächenhärte weist das Laufbahnelement eine ausreichend stabile Laufbahn auf, um eine lange Lebensdauer zu gewährleisten.

Gemäß einem Ausführungsbeispiel der Erfindung wird eine Großwälzlageranordnung angegeben, die wenigstens ein Wälzlagerelement nach einem der vorherigen Ansprüche 1 bis 5 aufweist und somit von den vorteilhaften Eigenschaften profitiert.

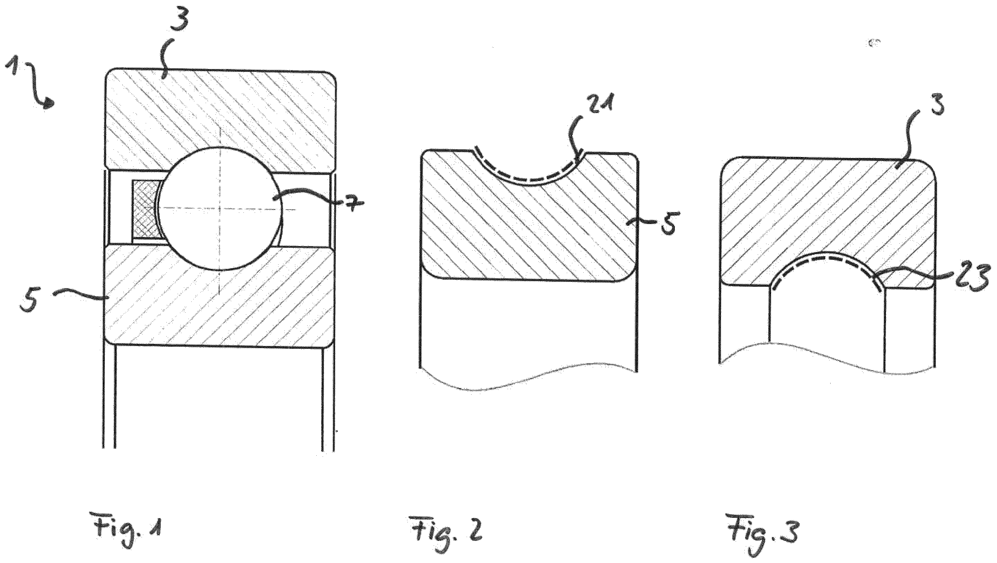

Weitere Vorteile und Ausgestaltungen der Erfindung ergeben sich aus dem nachfolgend beschriebenen Ausführungsbeispiel im Zusammenhang mit den beigefügten Figuren. Dabei zeigen die Figuren 1 bis 3 verschiedene Ansichten und Bauteile des Ausführungsbeispiels der Erfindung.

Gemäß einem Ausführungsbeispiel der Erfindung wird in der Figur 1 ein Großwälzlager 1 mit einem Durchmesser von mindestens 250 mm beschrieben. Das Großwälzlager umfasst zwei Laufbahnelemente, die als Außenring 3 und als Innenring 5 ausgeführt sind. Zwischen den Laufbahnelementen sind als Kugeln 7 ausgeführte Wälzkörper angeordnet. Bei Bewegung der zwei Laufbahnelemente kommt es zu einer abrollenden Bewegung der Kugeln 7 auf den Laufbahnelementen. Das Großwälzlager wird typischerweise in Einbausituationen angewendet, bei denen eine fortwährende umlaufende Rotation des Außenrings 3 im Vergleich zum Innenring 5 erfolgt oder umgekehrt. Dies kann beispielsweise in einer Windkraftanlage der Fall sein.

In der Figur 2 ist ausschnittsweise der Innenring 5 dargestellt. Er weist eine Laufbahn 21 auf, auf der die Kugeln 7 im Betrieb des Großwälzlagers 1 abrollen. Die Laufbahn 21 weist eine gehärtete Oberflächenschicht auf, die den Belastungen durch den Kontakt mit den Kugeln 7 widerstehen kann und eine lange Lebensdauer des Großwälzlagers gewährleistet. Gleiches gilt für den in der Figur 3 dargestellten Außenring 3, der eine ebenfalls oberflächlich gehärtete Laufbahn 23 aufweist.

Die Oberflächen der Laufbahnen 21 und 23 sind durch den abrollenden Kontakt mit den Wälzkörpern stets belastet. Die Lagerringe bestehen aus einem Stahl, der eine Beimischung von Kohlenstoff von 0,46 bis 1,0 Masse % und eine Beimischung von Molybdän von 0,12 bis 0,35 Masse% aufweist. Weitere Beimischungen sind bevorzugt Mangan zwischen 0,5 und 1,0 Masse% und/oder Chrom zwischen 0,9 und 1,5 Masse%. Entsprechende Materialien sind an sich bekannt, ihr Einsatz zur Herstellung von Laufbahnelementen mit entsprechender induktiver Härtung der Oberflächenschicht stellt im Vergleich zu bekannten Laufbahnelementen für Großwälzlager eine kostengünstigere und damit einfachere Herstellungsmethode bereit. Der Stahl kann beispielsweise der Spezifikation 50CrMo4 entsprechen, während bei bekannten Großlagern hauptsächlich 42CrMo4 eingesetzt wird.

Die Laufbahnen der Lagerringe sind nach Formgebung derselben durch ein induktives Verfahren gehärtet. Beispielsweise wird ein Induktor nahe über die Laufbahn geführt, wodurch diese erwärmt wird. Es kommt zu einer Phasenumwandlung, wobei insbesondere härteres Material gebildet wird. Mittels einer nachfolgenden Brause wird das erwärmte Material abgeschreckt, so dass die härtere Struktur erhalten bleibt. Dieses induktive Härteverfahren wird nach bekannten Verfahren bevorzugt schlupflos ausgeführt, so dass keine nicht gehärtete Zone auf der Laufbahn besteht. Die Laufbahn weist entlang des ganzen Laufbahnelements somit im Rahmen fertigungstechnischer Toleranzen dieselbe Härte auf.

Die maximale Härte der Oberflächenschicht beträgt mindestens 58 HRC. Diese Härte lässt sich auch bei zum Einsatz in Lagern bekannten Stahlsorten erreichen. Allerdings sind diese Stahlsorten zur Erreichung dieser Mindesthärte bis an die Grenzen ihrer werkstoffspezifischen Eigenschaften zu härten. Mit dem hier verwendeten Stahl ließe sich grundsätzlich eine deutlich höhere maximale Härte der Oberflächenschicht als 58 HRC erreichen. Diese Härte ist jedoch bei den meisten Anwendungen für Großlager nicht erforderlich. Insofern ist der Stahl zur Erreichung der Härte von 58 HRC bezüglich seiner werkstofflichen Möglichkeiten deutlich weniger ausgereizt als zu diesem Einsatzzweck bekannten Stahlsorten. Insofern ist zur Erreichung der gewünschten maximalen Härte ein im Vergleich zu bekannten angewendeten Herstellungsverfahren für Bauteile von Großlagern ein deutlich materialschonenderes Verfahren der Härtung möglich. So ist die maximale Temperatur beim Härten geringer und auch das Abschrecken kann mit geringeren Temperaturgradienten erfolgen, wodurch zudem ein flacherer Übergang der Härte zwischen der Oberflächenschicht und dem Grundgefüge entsteht. Der materialschonende Prozess führt insbesondere zu einer besseren Reproduzierbarkeit der Ergebnisse.

Das induktive Härtungsverfahren ist derart ausgeführt, dass die Tiefe der gehärteten Schicht den Anforderungen an die Lebensdauer des Lagers entspricht. Insbesondere ist die Tiefe der gehärteten Schicht derart gewählt, dass ein durch den Hertzschen Kontakt mit den Wälzkörpern erzeugter Spannungsverlauf überdeckt wird. Die gehärtet Schicht reicht also tiefer in das Material als die durch den Wälzkontakt erzeugte Spannung die Belastbarkeit des nicht gehärteten Grundmaterials übersteigt. Daher sind Überbelastungen des Grundmaterials ausgeschlossen, die erhöhte Spannung und Belastung wird durch Oberflächenschicht aufgenommen. Daraus resultiert eine hohe Lebensdauer des Großlagers. Zudem weist die Oberflächenschicht ein geeignetes Gefüge für eine hohe Tragfähigkeit des Lagers auf.

In einem weiteren Ausführungsbeispiel der Erfindung sind neben den Laufbahnelementen auch die Wälzkörper gemäß der Erfindung ausgeführt, sind also mittels eines induktiven Verfahrens gehärtet und bestehen aus einem entsprechenden Stahl. Alternativ ist auch ein Ausführungsbeispiel der Erfindung möglich, bei dem lediglich die Wälzkörper gemäß der Erfindung ausgebildet sind, nicht jedoch die Laufbahnelemente. Die Erfindung lässt sich folglich bei allem durch den Wälzkontakt belasteten Bestandteilen eines Wälzlagers vorteilhaft einsetzen. Zudem ist die Erfindung nicht auf Wälzlager mit Kugeln als Wälzkörper beschränkt, sondern grundsätzlich auf alle Typen von Großwälzlagern anwendbar.

### Bezugszeichenliste

- 1: Großwälzlager
- 3: Außenring
- 5: Innenring
- 7: Kugel
- 21, 23: Laufbahn

## Patentansprüche

1. Verfahren zur Herstellung eines Wälzlagerelements, insbesondere eines Laufbahnelements, für ein Großwälzlager mit folgenden Schritten:
- Auswahl eines Stahls, der eine Beimischung von Kohlenstoff von mindestens 0,46 Masse% aufweist;
- Bestimmen einer Kontaktzone für ein Wälzlagergegenelement;
- Bestimmen eines durch einen Hertzschen Kontakt zwischen Wälzlagerelement und Wälzlagergegenelement erzeugten Spannungsverlaufs in der Kontaktzone basierend auf einer zu erwartenden Belastung des Lagers;
- Induktives Härten der Kontaktzone, wodurch die Kontaktzone ein Grundgefüge und eine induktiv gehärtete Oberflächenschicht erhält, wobei das induktive Härten derart durchgeführt wird, dass
∘ die Oberflächenschicht eine maximale Härte aufweist, die geringer ist als die maximal erreichbare Härte des verwendeten Stahls, wobei die Härte innerhalb fertigungstechnischer Toleranzen gleich ist; und
∘ eine Tiefe der gehärteten Oberflächenschicht den durch den Hertzschen Kontakt erzeugten Spannungsverlauf überdeckt, insbesondere tiefer in das Material hineinreicht als der Spannungsverlauf.

2. Verfahren nach Anspruch 1, wobei beim induktiven Härten die Oberflächenschicht der Kontaktzone mit einem Induktor erwärmt und einer nachfolgenden Brause abgeschreckt wird, und die Härte direkt nach dem Abschrecken bestimmt wird.

3. Verfahren nach Anspruch 1 oder 2, wobei eine maximale Temperatur beim Härten geringer ist und das Abschrecken mit einem geringeren Temperaturgradienten erfolgt als beim verwendeten Stahl möglich, so dass der Stahl beim Härten nicht an seine werkstofflichen Grenzen gebracht wird.

4. Verfahren nach Anspruch 3, wobei die maximale Temperatur beim Härten und der Temperaturgradienten beim Abschrecken derart gewählt sind, dass ein flacher Härteverlauf zwischen dem Grundgefüge und der Oberflächenschicht entsteht.

5. Verfahren nach Anspruch 3 oder 4, wobei die maximale Temperatur beim Härten und der Temperaturgradienten beim Abschrecken derart gewählt sind, dass die Oberflächenschicht eine feine und stabile Gefügestruktur aufweist.

6. Verfahren nach einem der vorhergehenden Ansprüche, wobei der verwendete Stahl eine Beimischung von Molybdän, insbesondere mindestens 0,12 Masse% Molybdän, aufweist.

7. Verfahren nach Anspruch 6, wobei das induktive Härten derart durchgeführt wird, dass die Oberflächenschicht der Kontaktzone nach dem Abschrecken eine maximale Härte aufweist, die der Härte von Wälzlagerelementen für Großwälzlager, die aus 42CrMo4 Stahl hergestellt sind, entspricht, die aber geringer ist, als die maximal erreichbare Härte des verwendeten Stahls.

8. Verfahren nach einem der vorhergehenden Ansprüche, wobei der verwendete Stahl eine Beimischung von Molybdän aufweist und der Spezifikation 50CrMo4 entspricht und wobei das induktive Härten derart durchgeführt wird, dass die Oberflächenschicht der Kontaktzone nach dem Abschrecken eine maximale Härte aufweist, die der Härte von Wälzlagerelementen für Großwälzlager, die aus 42CrMo4 Stahl hergestellt sind, entspricht, und die aber geringer ist, als die maximal erreichbare Härte des verwendeten Stahls der Spezifikation 50CrMo4.

9. Verfahren nach einem der vorhergehenden Ansprüche, wobei das induktive Härteverfahren schlupflos ausgeführt wird.

10. Verfahren nach einem der vorhergehenden Ansprüche, wobei die Oberflächenschicht der Kontaktzone auf eine Härte von mindestens 58 HRC gehärtet wird.

11. Verfahren nach einem der vorhergehenden Ansprüche, wobei der verwendete Stahl eine Beimischung von Mangan und/oder Chrom aufweist.

12. Verfahren nach einem der vorhergehenden Ansprüche, wobei das Verfahren zur Herstellung eines Laufbahnelement eines Großwälzlagers mit mindestens 250mm Durchmesser eingesetzt wird.

## Claims

1. Method of producing a rolling bearing element, in particular a raceway element, for a large rolling bearing, having the following steps:
- selecting a steel including an addition of carbon of at least 0.46% by mass;
- determining a contact zone for a rolling bearing counterpart element;
- determining a stress profile in the contact zone, generated by Hertzian contact between rolling bearing element and rolling bearing counterpart element, on the basis of an expected load on the bearing;
- inductively hardening the contact zone, which endows the contact zone with a basic microstructure and an inductively hardened surface layer, wherein the inductive hardening operation is conducted in such a way that
∘ the surface layer has a maximum hardness lower than the maximum achievable hardness of the steel used, where the hardness is the same within manufacturing tolerances; and
∘ a depth of the hardened surface layer covers the stress profile generated by the Hertzian contact, and in particular extends deeper into the material than the stress profile.

2. Method according to Claim 1, wherein the inductive hardening operation involves heating the surface layer of the contact zone with an inductor and quenching it with a downstream sprinkler, and hardness is determined directly after the quenching.

3. Method according to Claim 1 or 2, wherein a maximum temperature in the hardening operation is relatively low and the quenching is effected with a lower temperature gradient than is possible in the case of the steel used, such that the steel is not brought to its physical limits in the course of hardening.

4. Method according to Claim 3, wherein the maximum temperature in the course of hardening and the temperature gradient in the course of quenching are selected so as to give rise to a flat hardness profile between the basic structure and the surface layer.

5. Method according to Claim 3 or 4, wherein the maximum temperature in the course of hardening and the temperature gradient in the course of quenching are selected such that the surface layer has a fine and stable microstructure.

6. Method according to any of the preceding claims, wherein the steel used includes an addition of molybdenum, in particular at least 0.12% by mass of molybdenum.

7. Method according to Claim 6, wherein the inductive hardening operation is conducted in such a way that the surface layer of the contact zone after quenching has a maximum hardness which corresponds to the hardness of rolling bearing elements for large rolling bearings which are produced from 42CrMo4 steel but which is lower than the maximum achievable hardness of the steel used.

8. Method according to any of the preceding claims, wherein the steel used includes an addition of molybdenum and conforms to the 50CrMo4 specification, and wherein the inductive hardening operation is conducted in such a way that the surface layer of the contact zone after quenching has a maximum hardness which corresponds to the hardness of rolling bearing elements for large rolling bearings which are produced from 42CrMo4 steel, but which is lower than the maximum achievable hardness of the steel of the 50CrMo4 specification used.

9. Method according to any of the preceding claims, wherein the inductive hardening method is executed without slippage.

10. Method according to any of the preceding claims, wherein the surface layer of the contact zone is hardened to a hardness of at least 58 HRC.

11. Method according to any of the preceding claims, wherein the steel used includes an addition of manganese and/or chromium.

12. Method according to any of the preceding claims, wherein the method is used for production of a raceway element of a large rolling bearing having a diameter of at least 250 mm.

## Revendications

1. Procédé de fabrication d'un élément de palier à roulement, notamment d'un élément de chemin de roulement, pour un palier à roulement de grande dimension, avec les étapes suivantes :
- la sélection d'un acier présentant un ajout de carbone d'au moins 0,46 % en masse ;
- la détermination d'une zone de contact pour un contre-élément de palier à roulement ;
- la détermination d'une courbe de tension générée par un contact hertzien entre un élément de palier à roulement et un contre-élément de palier à roulement dans la zone de contact sur la base d'une charge attendue du palier ;
- le durcissement par induction de la zone de contact, ce qui confère à la zone de contact une structure de base et une couche superficielle durcie par induction, le durcissement par induction étant réalisé de telle sorte que
∘ la couche superficielle présente une dureté maximale inférieure à la dureté maximale pouvant être atteinte par l'acier utilisé, la dureté étant identique dans les limites des tolérances de fabrication ; et
∘ une profondeur de la couche superficielle durcie recouvre la courbe de tension générée par le contact hertzien, notamment s'étend plus profondément dans le matériau que la courbe de tension.

2. Procédé selon la revendication 1, dans lequel, lors du durcissement par induction, la couche superficielle de la zone de contact est chauffée avec un inducteur, puis trempée au moyen d'une buse, et la dureté est déterminée immédiatement après la trempe.

3. Procédé selon la revendication 1 ou 2, dans lequel une température maximale lors du durcissement est inférieure à celle possible pour l'acier utilisé et la trempe s'effectue avec un gradient de température inférieur à celui possible pour l'acier utilisé, de telle sorte que l'acier n'atteint pas ses limites matérielles lors du durcissement.

4. Procédé selon la revendication 3, dans lequel la température maximale lors du durcissement et le gradient de température lors de la trempe sont choisis de manière à obtenir une courbe de dureté plate entre la structure de base et la couche superficielle.

5. Procédé selon la revendication 3 ou 4, dans lequel la température maximale lors du durcissement et le gradient de température lors de la trempe sont choisis de telle sorte que la couche superficielle présente une structure fine et stable.

6. Procédé selon l'une quelconque des revendications précédentes, dans lequel l'acier utilisé présente un ajout de molybdène, notamment au moins 0,12 % en masse de molybdène.

7. Procédé selon la revendication 6, dans lequel le durcissement par induction est effectué de telle sorte que la couche superficielle de la zone de contact présente après la trempe une dureté maximale qui correspond à la dureté des éléments de palier à roulement pour des paliers à roulement de grande dimension fabriqués en acier 42CrMo4, mais qui est inférieure à la dureté maximale pouvant être atteinte par l'acier utilisé.

8. Procédé selon l'une quelconque des revendications précédentes, dans lequel l'acier utilisé présente un ajout de molybdène et correspond à la spécification 50CrMo4, et dans lequel le durcissement par induction est effectué de telle sorte que la couche superficielle de la zone de contact présente après la trempe une dureté maximale qui correspond à la dureté des éléments de palier à roulement pour paliers à roulement de grande dimension, fabriqués en acier 42CrMo4, mais inférieure à la dureté maximale pouvant être atteinte par l'acier utilisé de spécification 50CrMo4.

9. Procédé selon l'une quelconque des revendications précédentes, dans lequel le procédé de durcissement par induction est réalisé sans glissement.

10. Procédé selon l'une quelconque des revendications précédentes, dans lequel la couche superficielle de la zone de contact est durcie à une dureté d'au moins 58 HRC.

11. Procédé selon l'une quelconque des revendications précédentes, dans lequel l'acier utilisé présente un ajout de manganèse et/ou de chrome.

12. Procédé selon l'une quelconque des revendications précédentes, le procédé étant utilisé pour la fabrication d'un élément de chemin de roulement d'un palier à roulement de grande dimension d'au moins 250 mm de diamètre.
